# FASCICULE DE BREVET EUROPEEN

(11) **EP 1 792 113 B1**
(45) Date de publication et mention de la délivrance du brevet: **23.02.2011**
(21) Numéro de dépôt: 05798270.4
(22) Date de dépôt: 25.08.2005
(51) Int. Cl.: F16L 11/22, F16L 58/00

(54) **CANALISATIONS FLEXIBLES A CONDUITES MULTIPLES PRESERVEES DE LA CORROSION**
FLEXIBLE ROHRLEITUNG MIT MEHREREN GEGEN KORROSION GESCHÜTZTEN ROHREN
FLEXIBLE PIPELINE WITH MULTIPLE PIPES PROTECTED AGAINST CORROSION

(30) Priorité: 13.09.2004 FR 0409684
(43) Date de publication de la demande: 06.06.2007
(73) Titulaire: Technip France, 92400 Courbevoie (FR)
(72) Inventeur: DUPOIRON, François, F-69340 Francheville (FR); JACQUEMIN, Sébastien, F-78160 Marly le Roi (FR)
(74) Mandataire: Bertrand, Didier
(86) Numéro de dépôt international: PCT/FR2005/002145
(87) Numéro de publication internationale: WO 2006/030085

(56) Documents cités:
- FR-A- 2 752 908
- FR-A- 2 782 142
- GB-A- 2 351 301
- US-A- 4 688 828
- US-B1- 6 689 231

## Description

La présente invention se rapporte à des canalisations flexibles de conduites multiples et notamment à des améliorations visant à préserver certaines conduites secondaires de la corrosion.

Ces canalisations flexibles sont destinées au transport sous-marin des hydrocarbures et elles comprennent notamment, un élément flexible central, ou conduite principale, dans lequel ledit hydrocarbure est susceptible de s'écouler et des conduites périphériques secondaires, le tout logé à l'intérieur d'une gaine externe flexible. Un espace annulaire entre l'élément flexible central et la gaine externe est adapté à loger les conduites périphériques secondaires. Ces conduites périphériques en acier allié ou en métal passivable, sont étendues longitudinalement dans l'espace annulaire, soit hélicoïdalement autour de l'élément flexible central, soit de façon sinusoïdale autour d'une génératrice de la canalisation, plus communément appelé S/Z et ce, de manière à permettre le fléchissement de ces canalisations.

Ces conduites sont adaptées au transport de fluides, de gaz sous pression par exemple, entre les deux extrémités d'une canalisation sous-marine, l'une par exemple située en surface au niveau d'une plate-forme, l'autre située au voisinage du fond marin. Généralement, ces gaz sous pression, sont véhiculés depuis la plateforme vers le fond marin pour être injectés au niveau de la tête de puits de façon à faciliter la remontée du brut (« Gas lift » en langue anglaise).

Toutefois, les conduites périphériques sont susceptibles de se dégrader par la corrosion, ce d'autant plus que de l'eau de mer apte à contenir de l'oxygène, circule généralement dans l'espace annulaire et compte tenu de la pression qui s'exerce sur elles, elles peuvent avec le temps se perforer. Afin d'y pallier il a déjà été imaginé de préserver électrochimiquement les conduites périphériques en acier par protection cathodique en les couplant électriquement à des anodes sacrificielles de type zinc ou aluminium.

On pourra notamment se référer au document FR 2 752 908 qui décrit un tel dispositif de protection.

Cependant, ce type de protection peut s'avérer insuffisant du fait du très fort confinement de cet annulaire et/ou entraîner la production d'hydrogène, lequel est susceptible de générer une fragilisation grave, dite fragilisation par l'hydrogène, en particulier pour les conduites périphériques en acier inoxydable à haute caractéristique.

Un objet de la présente invention est alors de fournir une canalisation flexible dont les conduites périphériques en acier allié ou métal en alliage métallique passivable, sont préservées non seulement de la corrosion généralisée mais également de la fragilisation par l'hydrogène.

Dans ce but, la présente invention propose une canalisation flexible à conduites multiples, adaptée au transport des hydrocarbures, ladite canalisation comprenant un élément flexible central à l'intérieur duquel circule ledit hydrocarbure, une gaine externe autour dudit élément flexible central et au moins une conduite périphérique en acier allié ou métal en alliage métallique passivable, qui s'étend longitudinalement dans un espace annulaire situé entre ladite gaine externe et ledit élément flexible central, ledit espace annulaire comprenant en outre des éléments métalliques en contact avec un milieu aqueux contenant de l'oxygène, lesdits éléments métalliques étant susceptibles de s'oxyder en fixant l'oxygène ; selon l'invention lesdits éléments métalliques oxydables et ladite conduite périphérique sont maintenus espacés les uns de l'autre pour être découplés électriquement.

Ainsi, une caractéristique de l'invention réside dans la mise en oeuvre d'éléments métalliques oxydables dans l'annulaire de la canalisation qui soient non pas couplés avec les conduites périphériques mais espacées d'elles de manière à consommer l'oxygène présent dans l'annulaire en se corrodant et non pas à décaler le potentiel de corrosion des conduites périphériques en acier ou en alliage métallique passivable. De la sorte, en appauvrissant la concentration en oxygène du milieu aqueux qui circule dans l'annulaire on diminue considérablement la vitesse de corrosion des conduites en acier ou en alliage métallique passivable.

Selon un mode de mise en oeuvre de l'invention particulièrement avantageux, la canalisation flexible comprend au moins une paire de joncs installée longitudinalement dans ledit espace annulaire, lesdits joncs présentant deux faces d'appui opposées adaptées à prendre appui respectivement contre l'élément flexible central et contre ladite gaine externe, et des surfaces latérales concaves, ladite paire de joncs étant adaptée à maintenir ladite conduite périphérique entre deux surfaces latérales en regard et espacée dudit élément flexible central et de ladite gaine externe.

Ainsi, les paires de joncs sont adaptées à maintenir en position fixe les conduites périphériques. Préférentiellement, une pluralité de joncs et de conduites périphériques est étendue longitudinalement dans l'espace annulaire sur la totalité de sa circonférence, les joncs et les conduites étant respectivement en appui les uns contre les autres selon des directions tangentielles.

De la sorte, joncs et conduites périphériques sont entièrement bloqués ensemble dans la circonférence de l'annulaire et de façon avantageuse lesdits éléments métalliques sont montés solidaires desdits joncs. Ainsi, les éléments métalliques oxydables sont maintenus espacés des conduites périphériques sans possibilité de contact. En conséquence, aucun couplage électrique n'est possible entre les conduites et les éléments métalliques qui néanmoins peuvent s'oxyder et appauvrir en oxygène le milieu aqueux de l'annulaire.

Selon un mode particulier est avantageux de mise en oeuvre de l'invention, lesdits joncs présentent, entre lesdites faces d'appui et lesdites surfaces latérales concaves des parties libres en saillie, lesdites parties libres en saillies d'une paire de joncs étant adaptées à s'étendre en regard les unes des autres, et lesdits éléments métalliques oxydables sont étendus le long desdites parties libres en saillie. Ainsi, un jonc présente de part et d'autre de l'une de ces deux surfaces latérales concaves deux parties libres en saillie et les deux parties libres en saillie d'une paire de joncs entre lesquels s'étend une conduite, sont étendues respectivement en regard à l'une de l'autre de part et d'autre de ladite conduite. De la sorte, en installant les éléments métalliques oxydables le long de ces parties libres en saillie on appauvrit le milieu aqueux en oxygène au voisinage de la conduite ce qui permet de la préserver mieux encore de la corrosion.

Avantageusement, lesdits éléments métalliques oxydables présentent une partie d'ancrage enfoncées dans lesdites faces d'appui de telle façon que la gaine externe qui vient en appui contre lesdites faces, coince parfaitement les éléments métalliques qui sont alors bloqués tangentiellement par rapport à la canalisation et ne peuvent venir en contact avec les conduites périphériques.

Selon un autre mode de mise en oeuvre de l'invention particulièrement avantageux, lesdits éléments métalliques oxydables présentent des rainures de manière à augmenter la surface de contact avec le milieu aqueux et ainsi accroître la consommation d'oxygène par corrosion. Préférentiellement, lesdits éléments métalliques sont réalisés en acier de manière à pouvoir être mis en oeuvre à un coût avantageux par les moyens habituels nécessaires à la fabrication des canalisations flexibles.

En outre, lesdits joncs sont réalisés dans un matériau électriquement isolant de type matière plastique, notamment pour éviter le couplage électrique entre les conduites périphériques et les éléments métalliques si toutefois les conduites périphériques ne sont pas recouvertes d'une couche de protection isolante.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique partielle en perspective, avec arrachement partiel, d'une canalisation flexible à conduites multiples, conforme à un mode de mise en oeuvre de l'invention ;et,
- la Figure 2 est une vue schématique en coupe de détail d'éléments représentés sur la Figure 1.

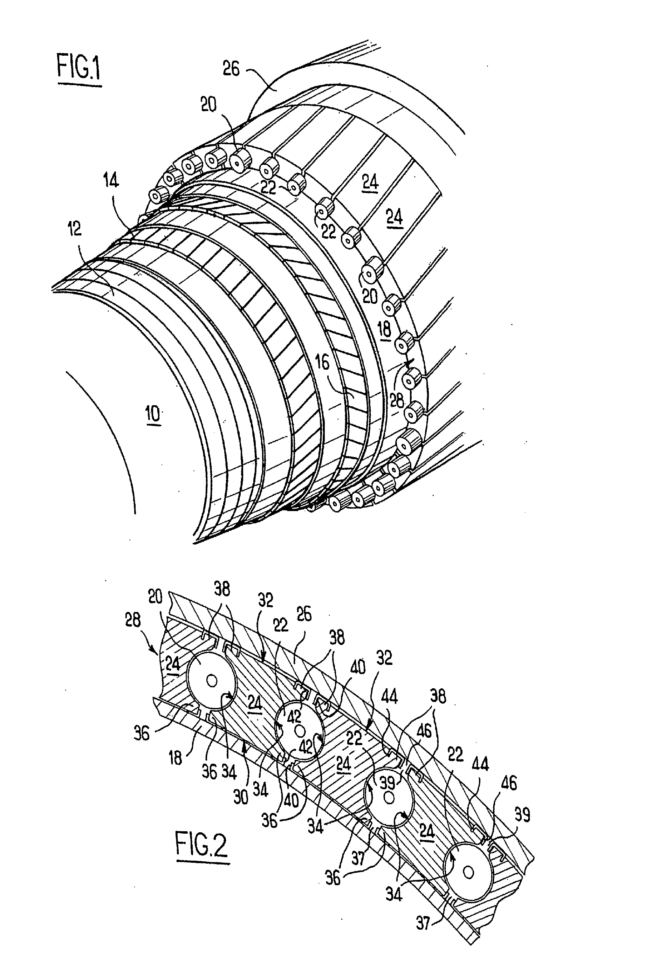

La Figure 1 montre partiellement une canalisation flexible conforme à l'invention, adaptée au transport sous-marin des hydrocarbures et qui est généralement installée entre une installation de surface et une installation de fond. Elle présente de l'intérieur de la canalisation vers l'extérieur :
- une gaine d'étanchéité 10 laquelle recouvre une carcasse métallique non représentée ;
- une voûte de pression 12 ;
- une nappe d'armures de traction comprenant deux armures 14 et 16 enroulées en sens inverse de manière croisée avec un angle d'armage sensiblement équivalent ;
- une gaine interne étanche 18 ;
- une nappe que l'on détaillera ci-après, constituée d'une pluralité de câbles chauffants 20 et de conduites périphériques 22, alternées avec des joncs 24, lesdits joncs 24 étant constitués d'organes de transmission d'effort d'écrasement ; et,
- une gaine externe 26.

Les conduites périphériques précitées 22 sont adaptées à véhiculer des fluides sous pression d'une installation de surface vers le fond marin, pour faciliter la remontée des hydrocarbures. Ces fluides, généralement des gaz récupérés de l'hydrocarbure en surface, sont réinjectés à la base de la conduite, dans le fond marin de façon à défragmenter et/ou à entraîner notamment, les bouchons de paraffine qui se seraient formés. Les câbles chauffants 20 ont eux pour fonction de réchauffer l'hydrocarbure pour faire fondre éventuellement ces bouchons de paraffine.

Ces conduites sont installées longitudinalement dans un espace annulaire 28 de la canalisation, située entre la gaine interne étanche 18 et la gaine externe 26, en hélice ou sinusoïdalement, et elles sont maintenues à la fois espacées l'une de l'autre et respectivement à distance de la gaine interne étanche 18 et de la gaine externe 26 grâce aux joncs 24 que l'on va maintenant détailler en référence à la Figure 2. Par ailleurs, l'eau de mer pénètre dans l'espace annulaire 28, de sorte que les joncs 24 et les conduites sont noyés dans un milieu aqueux susceptible de contenir de l'oxygène. Or, les conduites périphériques sont réalisées en acier inoxydable, éventuellement recouvertes d'une couche de protection en matière plastique, et elles sont susceptibles de se corrodées sous l'action conjointe de l'eau et de l'oxygène. L'eau de mer contenant du chlorure de sodium et différents autres électrolytes, est plus conductrice que l'eau douce et partant la vitesse de diffusion des espèces chimiques aux surfaces en est accélérée et par la même la vitesse de corrosion.

On retrouve partiellement sur cette Figure 2 en coupe, l'espace annulaire 28 de la canalisation conforme à l'invention, et également la gaine interne étanche 18 et la gaine externe 26 entre lesquels s'étendent les joncs 24 et les conduites périphériques 22.

Chacun des joncs 24 est formé d'un organe flexible qui présente deux faces d'appui opposées, une première face 30 venant en appui contre la surface externe de la gaine interne étanche 18 et une seconde face 32 venant en appui contre la surface interne de la gaine externe 26. Il présente également, deux surfaces latérales concaves opposées 34 respectivement bordées de deux parties libres en saillie, une partie libre interne 36 et une partie libre externe 38.

Les surfaces latérales concaves opposées 34 forment en section droite une portion d'arc dont la longueur est inférieure au demi périmètre des conduites périphériques 22 de telle sorte que, toute paire de joncs 24 enserrant une conduite périphérique 22, présente respectivement, deux parties libres internes 36 et deux parties libres externes 38 en regard et espacées les unes des autres, de part et d'autre de ladite conduite périphérique. Ladite paire de joncs définie alors deux interstices opposés, un interstice interne 37 et un interstice externe 39, dans lesquels de l'eau est susceptible de s'écouler.

Par ailleurs, ces joncs 24 sont réalisés en matière plastique, par exemple en polyéthylène ou en polyamide de manière à résister notamment aux efforts d'écrasement pour pouvoir les retransmettre. De plus, ils sont alternativement étendus avec une conduite périphérique 22, dans toute la circonférence de l'espace annulaire 28. En conséquence, les conduites 22 et les joncs 24 sont bloqués tangentiellement et radialement les uns par rapport aux autres.

Selon une caractéristique essentielle de l'invention, des éléments métalliques oxydables 40,42 sont installés autour des parties libres en saillie 36, 38 des joncs 24.

Selon un mode de réalisation particulier les éléments métalliques oxydables 40, 42 sont formés d'un profilé métallique en U et en acier faiblement allié, par exemple en acier au carbone. Toutefois, l'acier galvanisé, le zinc ou l'aluminium sont également tout à fait adaptés. Le profilé métallique présente deux ailes, une première aile 44 enfoncée dans la seconde face d'appui 32 des joncs 24, au voisinage de la partie libre en saillie 38, et une seconde aile 46 étendue le long de cette partie libre en saillie 38 vers la conduite périphérique 22. Bien évidemment, cette seconde aile 46 ne vient pas en contact avec la conduite périphérique pour éviter tout couplage électrique.

Ainsi, les secondes ailes 46 de chacun des profilés 40, 42 d'une paire de joncs 24 s'étendent en regard dans l'interstice et au voisinage de la conduite 22. La mise en oeuvre des profilés 40, 42 a été décrite pour les interstices externes 39 correspondants au parti libre externe 38, elle est toutefois strictement identique pour les parties libres internes 36 et ne sera pas décrite à nouveau.

De la sorte, les éléments métalliques oxydables formés des profilés 42, 40 sont baignés au moins partiellement par l'eau qui circulent dans les interstices 37, 39 et sont donc oxydés grâce à l'oxygène qui est dissous dans cette eau. Ainsi, le milieu aqueux s'appauvrit en oxygène qui par conséquent ne peut plus contribuer à l'oxydation d'autres éléments et en particulier des conduites périphériques.

Selon une variante de réalisation particulière, on augmente la surface active de ces éléments métalliques oxydables, en réalisant des rainures à la surface de ces éléments. De la sorte, la surface apte à réagir avec l'oxygène est augmentée sans pour autant augmenter les dimensions globales des éléments métalliques.

Bien évidemment, l'invention n'est pas limitée à des éléments métalliques oxydables formés de profilés. On prévoit ainsi, la fixation de bandes métalliques oxydables contre les parties libres en saillie 38, 36 des joncs 24, grâce des moyens de fixation vissés dans ces mêmes joncs 24.

Là encore, les bandes métalliques seront maintenues à distance des conduits périphériques 22 de manière à éviter le contact et partant, le couplage électrique.

Par ailleurs, selon encore une autre variante de réalisation, on remplace régulièrement des tubes à la périphérie dans l'annulaire, par exemple un sur cinq, par des éléments métalliques oxydables qui permettent de piéger l'oxygène et de provoquer la diffusion de l'oxygène à distance entre les joncs voisins.

Selon une dernière variante de réalisation non représentée, à la place ou en complément des éléments métalliques oxydables 40,42 on enroule un ruban métallique autour des joncs 24 en hélice et a pas court, ledit ruban métallique ayant la double fonction de s'oxyder en fixant l'oxygène et de faciliter les transferts d'énergie thermique fournie par les câbles chauffants 20.

## Revendications

1. Canalisation flexible à conduites multiples, adaptée au transport des hydrocarbures, ladite canalisation comprenant un élément flexible central (18) à l'intérieur duquel circule ledit hydrocarbure, une gaine externe (26) autour dudit élément flexible central (18) et au moins une conduite périphérique (22) en acier allié qui s'étend longitudinalement dans un espace annulaire (28) situé entre ladite gaine externe (26) et ledit élément flexible central (18), ledit espace annulaire (28) comprenant en outre des éléments métalliques (40, 42) apte à entrer en contact avec un milieu aqueux contenant de l'oxygène, lesdits éléments métalliques étant susceptibles de s'oxyder en fixant l'oxygène ;
**caractérisée en ce que** lesdits éléments métalliques (40, 42) oxydables et ladite conduite périphérique (22) sont maintenus espacés les uns de l'autre pour être découplés électriquement.

2. Canalisation flexible selon la revendication 1, **caractérisée en ce qu'**elle comprend au moins une paire de joncs (24) installée longitudinalement dans ledit espace annulaire (28), lesdits joncs (24) présentant deux faces d'appui opposées (30, 32) adaptées à prendre appui respectivement contre l'élément flexible central (18) et contre ladite gaine externe (26), et des surfaces latérales concaves (34), ladite paire de joncs (24) étant adaptée à maintenir ladite conduite périphérique (22) entre deux surfaces latérales (34) en regard et espacée dudit élément flexible central (18) et de ladite gaine externe (26).

3. Canalisation flexible selon la revendication 2, **caractérisée en ce que** lesdits éléments métalliques (40, 42) sont montés solidaires desdits joncs (24).

4. Canalisation flexible selon la revendication 2 ou 3, **caractérisée en ce que** lesdits joncs (24) présentent, entre lesdites faces d'appui (32, 30) et lesdites surfaces latérales concaves (34) des parties libres en saillie (36, 38), lesdites parties libres en saillies d'une paire de joncs (24) étant adaptées à s'étendre en regard les unes des autres, et **en ce que** lesdits éléments métalliques oxydables (40, 42) sont étendus le long desdites parties libres en saillie (36, 38).

5. Canalisation flexible selon l'une quelconque des revendications 2 à 4, **caractérisée en ce que** lesdits éléments métalliques oxydables (40, 42) présentent une partie d'ancrage encastrée dans lesdites faces d'appui (30, 32).

6. Canalisation flexible selon l'une quelconque des revendications 2 à 5, **caractérisée en ce que** lesdits éléments métalliques oxydables (40, 42) présentent des rainures.

7. Canalisation flexible selon l'une quelconque des revendications 2 à 6, **caractérisée en ce que** lesdits éléments métalliques oxydables (40, 42) sont réalisés en acier.

8. Canalisation flexible selon l'une quelconque des revendications 2 à 7, **caractérisée en ce que** lesdits joncs (24) sont réalisés dans un matériau électriquement isolant de type matière plastique.

## Claims

1. A multi-pipe flexible flowline designed to transport hydrocarbons, said flowline comprising a central flexible element (18) inside which said hydrocarbon flows, an external sheath (26) around said central flexible element (18) and at least one peripheral pipe (22) made of alloy steel that extends longitudinally in an annular space (28) lying between said external sheath (26) and said central flexible element (18), said annular space (28) further including metal elements (40, 42) adapted to make contact with an oxygen-containing aqueous medium, said metal elements being oxidizable, thus fixing the oxygen,
**characterized in that** said oxidizable metal elements (40, 42) and said peripheral pipe (22) are kept spaced apart so as to be electrically decoupled.

2. The flexible flowline as claimed in claim 1, **characterized in that** it includes at least one pair of keepers (24) which is installed longitudinally in said annular space (28), said keepers (24) having two opposed bearing faces (30, 32), which are designed to bear against the central flexible element (18) and against said external sheath (26) respectively, and concave lateral surfaces (34), said pair of keepers (24) being designed to keep said peripheral pipe (22) between two facing lateral surfaces (34) and spaced apart from both said central flexible element (18) and said external sheath (26).

3. The flexible flowline as claimed in claim 2, **characterized in that** said metal elements (40, 42) are fastened to said keepers (24).

4. The flexible flowline as claimed in claim 2 or 3, **characterized in that** said keepers (24) have, between said bearing faces (32, 30) and said concave lateral surfaces (34), free projecting parts (36, 38), said free projecting parts of a pair of keepers (24) being designed to lie facing each other, and **in that** said oxidizable metal elements (40, 42) extend along said free projecting parts (36, 38).

5. The flexible flowline as claimed in any one of claims 2 to 4, **characterized in that** said oxidizable metal elements (40, 42) have an anchoring part embedded in said bearing faces (30, 32).

6. The flexible flowline as claimed in any one of claims 2 to 5, **characterized in that** said oxidizable metal elements (40, 42) have grooves.

7. The flexible flowline as claimed in any one of claims 2 to 6, **characterized in that** said oxidizable metal elements (40, 42) are made of steel.

8. The flexible flowline as claimed in any one of claims 2 to 7, **characterized in that** said keepers (24) are made in a plastic-type electrically insulating material.

## Patentansprüche

1. Flexible Leitung mit mehreren Rohrleitungen, welche für einen Transport von Kohlenwasserstoffen ausgebildet ist, wobei die Leitung ein zentrales flexibles Element (18), im Inneren dessen der Kohlenwasserstoff strömt, einen äußeren Mantel (26) um das zentrale flexible Element (18) herum und wenigstens eine umfangsseitige Rohrleitung (22) aus legiertem Stahl, welche sich in einer Längsrichtung in einem ringförmigen Raum (28), der zwischen dem äußeren Mantel (26) und dem zentralen flexiblen Element (18) angeordnet ist, erstreckt, aufweist, wobei der ringförmige Raum (28) ferner Metallelemente (40, 42) aufweist, die dafür geeignet sind, in Kontakt mit einem wässrigen, sauerstoffhaltigen Medium zu treten, wobei die Metallelemente dafür geeignet sind, unter Bindung des Sauerstoffs zu oxidieren;
**dadurch gekennzeichnet, dass** die oxidierbaren Metallelemente (40, 42) und die umfangsseitige Rohrleitung (22) derart voneinander beabstandet gehalten sind, dass sie elektrisch entkoppelt sind.

2. Flexible Leitung nach Anspruch 1, **dadurch gekennzeichnet, dass** sie wenigstens ein Paar von Stäben (24) aufweist, welches in der Längsrichtung in dem ringförmigen Raum (28) angeordnet ist, wobei die Stäbe (24) mit zwei gegenüberliegenden Auflageflächen (30, 32) versehen sind, die dafür ausgebildet sind, gegen das zentrale flexible Element (18) bzw. gegen den äußeren Mantel (26) in Anlage zu gelangen, und konkave seitliche Oberflächen (34) aufweisen, wobei das Paar von Stäben (24) dafür ausgebildet ist, die umfangsseitige Rohrleitung (22) zwischen zwei einander gegenüberstehenden seitlichen Oberflächen (34) und von dem zentralen flexiblen Element (18) und dem äußeren Mantel (26) beabstandet zu halten.

3. Flexible Leitung nach Anspruch 2, **dadurch gekennzeichnet, dass** die Metallelemente (40, 42) an den Stäben (24) befestigt sind.

4. Flexible Leitung nach Anspruch 2 oder 3, **dadurch gekennzeichnet, dass** die Stäbe (24) zwischen den Auflageflächen (32, 30) und den konkaven seitlichen Oberflächen (34) freie vorspringende Abschnitte (36, 38) aufweisen, wobei die freien vorspringenden Abschnitte eines Paares von Stäben (24) dafür ausgebildet sind, um sich einander gegenüberstehend zu erstrecken, und dass die oxidierbaren Metallelemente (40, 42) sich entlang der freien vorspringenden Abschnitte (36, 38) erstrecken.

5. Flexible Leitung nach einem der Ansprüche 2 bis 4, **dadurch gekennzeichnet, dass** die oxidierbaren Metallelemente (40, 42) einen in die Auflageflächen (30, 32) eingebetteten Verankerungsabschnitt aufweisen.

6. Flexible Leitung nach einem der Ansprüche 2 bis 5, **dadurch gekennzeichnet, dass** die oxidierbaren Metallelemente (40, 42) Nuten aufweisen.

7. Flexible Leitung nach einem der Ansprüche 2 bis 6, **dadurch gekennzeichnet, dass** die oxidierbaren Metallelemente (40, 42) aus einem Stahl ausgebildet sind.

8. Flexible Leitung nach einem der Ansprüche 2 bis 7, **dadurch gekennzeichnet, dass** die Stäbe (24) mit einem elektrisch isolierenden Material vom Typ eines Kunststoffmaterials ausgebildet sind.
